# EUROPÄISCHE PATENTSCHRIFT

(11) **EP 3 192 091 B1**
(45) Veröffentlichungstag und Bekanntmachung des Hinweises auf die Patenterteilung: **15.08.2018**
(21) Anmeldenummer: 15762572.4
(22) Anmeldetag: 09.09.2015
(51) Int. Cl.: H01H 3/02, H01H 9/16, G05B 19/02

(54) **ÜBERWACHTER ADAPTIERBARER NOTAUSSCHALTER**
MONITORED ADAPTABLE EMERGENCY OFF-SWITCH
INTERRUPTEUR D'ARRÊT D'URGENCE ADAPTABLE CONTRÔLÉ

(30) Priorität: 11.09.2014 DE 102014113135
(43) Veröffentlichungstag der Anmeldung: 19.07.2017
(73) Patentinhaber: Pilz GmbH & Co. KG, 73760 Ostfildern (DE)
(72) Erfinder: BELLINGKRODT, Martin, 73760 Ostfildern (DE); ZINSER, Christoph, 73760 Ostfildern (DE); WEISHAAR, Christoph, 73760 Ostfildern (DE); PETERS, Helge, 73760 Ostfildern (DE)
(74) Vertreter: Witte, Weller & Partner Patentanwälte mbB
(86) Internationale Anmeldenummer: PCT/EP2015/070588
(87) Internationale Veröffentlichungsnummer: WO 2016/038078

(56) Entgegenhaltungen:
- DE-A1-102006 058 708
- JP-A- 2011 197 859

## Beschreibung

Die vorliegende Erfindung betrifft einen Notausschalter zum Auslösen einer Notabschaltfunktion zum sicherheitsgerichteten Abschalten einer elektrischen Einrichtung sowie ein entsprechendes Verfahren.

Notausschalter im Sinne der vorliegenden Erfindung werden dazu verwendet, um eine elektrische Einrichtung, beispielsweise eine elektrische Maschine, eine industrielle Produktionsanlage oder eine elektrische Versorgungseinrichtung, in einer Notfall- oder Gefahrensituation gezielt abschalten zu können. Die Notausschalter besitzen hierzu üblicherweise ein in roter Farbe gestaltetes Betätigungselement, in aller Regel ein Drucktaster, das vor einem gelben Hintergrund, beispielsweise einem gelben Gehäuseteil, angeordnet ist. Aufgrund der zumindest früher weit verbreiteten Form des Betätigungselements werden derartige Notausschalter häufig auch als Pilztaster bezeichnet.

Für komplexe Maschinenanlagen mit mehreren Notausschaltern oder für Anlagen mit einer mobilen von einer Maschine lösbaren Bedieneinheit werden vermehrt adaptierbare Notausschalter benötigt. Adaptierbar bedeutet in diesem Zusammenhang die Möglichkeit für bestimmte Anwendungen den Notausschalter in einen inaktiven Zustand zu versetzen, in dem er seine bestimmungsgemäße Notabschaltfunktion nicht ausübt. Ein Beispiel für solch eine Anwendung sind mobile Programmierpanel für Industrieroboter, die nur während des Programmierens mit einem Roboter verbunden sind und gemäß einschlägiger Sicherheitsnormen (ISO 13849-1) mit einem Notausschalter bestückt seien müssen. Sobald ein derartiges Panel nicht mehr mit dem Roboter verbunden ist, kann es in der Regel auch die Notabschaltfunktion nicht mehr auslösen. Es versteht sich, dass in solch einen Fall der Notausschalter nicht mehr als solcher dargestellt werden darf, da sonst ein Benutzer in falsche Sicherheit gewogen wird.

Dieses Problem aufgreifend offenbart DE 199 19 012 A1 eine Notausbefehlseinrichtung, die im spannungslosem Zustand, d.h. in einem Zustand, in dem keine Verbindung zu einer Anlage oder Maschine beseht, farblich neutral erscheint und so nicht als Notausschalter wahrgenommen wird. Sobald jedoch eine Verbindung zu einer Maschine hergestellt ist und über die Notausbefehlseinrichtung eine Notausschaltfunktion auslösbar ist, nimmt die Notausbefehlseinrichtung ihre charakteristische Farbgebung ein. Hierzu umfasst die Notausbefehlseinrichtung bspw. ein transparentes oder transluzentes Gehäuse, das über farbliche Beleuchtungselemente bspw. farbige LEDs beleuchtet werden kann. Mit der Aktivierung der Befehlseinheit werden die Beleuchtungselemente eingeschaltet und die Notausbefehlseinrichtung erscheint in einer normgerechten Farbgebung.

Als Alternative zur aktiven Beleuchtung des adaptierbaren Notausschalters offenbart die DE 103 44 385 A1 einen weiteren adaptierbaren Notausschalter, der in einer Ruhestellung die zuvor erwähnte charakteristische Färbung aufweist und beim Deaktivieren über ein Passivierungselement optisch neutral dargestellt werden kann. So kann beispielsweise eine LCD- oder TFT-Anzeige am Gehäuse des Notausschalters im passiven Zustand die Signalfarben des Gehäuses verdecken. Der Vorteil dieser Variante liegt darin, dass der Notausschalter im aktiven Zustand nicht von einer aktiven Beleuchtung abhängig ist.

Bei beiden vorstehend genannten Varianten, also unabhängig davon, ob der Notausschalter aktiv beleuchtet wird oder aktiv ausgeblendet wird, besteht die Gefahr, dass die jeweilige optische Änderung aufgrund eines Fehlers nicht eintritt. Mit anderen Worten kann es unter Umständen vorkommen, dass ein inaktiver Notausschalter als aktiv bzw. ein aktiver Notausschalter als passiv dargestellt wird. Es versteht sich, dass ein falsch angezeigter Notausschalter ein erhebliches Sicherheitsrisiko mit sich bringt.

JP 2011 -197859 A offenbart einen Notausschalter gemäß dem Oberbegriff des Anspruchs 1, der auf einem Programmierhandgerät angeordnet ist und hinsichtlich seiner Funktionsfähigkeit überwacht wird. Ist der Notausschalter defekt oder betätigt wird dies mittels einer Anzeigevorrichtung angezeigt. Ferner offenbart dieses Dokument ein Verfahren gemäß dem Oberbegriff des Anspruchs 7.

Vor diesem Hintergrund ist eine Aufgabe der vorliegenden Erfindung, einen Notausschalter anzugeben, der ein höheres Maß an Sicherheit bietet, sich leicht realisieren lässt sowie in bestehende Anwendungen leicht integrierbar ist.

Gemäß einem Aspekt der vorliegenden Erfindung wird die Aufgabe durch einen Notausschalter zum Auslösen einer Notabschaltfunktion zum sicherheitsgerichteten Abschalten einer elektrischen Einrichtung gelöst, mit einem Betätigungselement und zumindest zwei elektrischen Kontakten, die über eine Kontaktbrücke miteinander verbindbar sind, wobei eine Position in der Kontaktbrücke über das Betätigungselement beeinflusst wird, so dass die elektrischen Kontakte geöffnet und/oder geschlossen werden können, mit einem aktiven Betriebszustand, in dem die Notabschaltfunktion durch Bewegen der Kontaktbrücke auslösbar ist, und einem passiven Betriebszustand, in dem der Notausschalter funktionslos ist, mit einer Visualisierungseinrichtung mit zumindest einem ersten und einem zweiten Anzeigezustand, wobei im ersten Anzeigezustand der Notausschalter, insbesondere das Betätigungselement, optisch hervorgehoben ist und im zweiten Anzeigezustand der Notausschalter neutral dargestellt ist, und die Visualisierungseinrichtung ferner dazu ausgebildet ist, im aktiven Betriebszustand den ersten Anzeigezustand und im passiven Betriebszustand den zweiten Anzeigezustand einzunehmen, und mit einer Überwachungseinheit, die überwacht, ob sich die Visualisierungseinrichtung im ersten oder im zweiten Anzeigezustand befindet, um in Abhängigkeit davon eine Aktion, insbesondere die Notabschaltfunktion, auszulösen, wobei die Visualisierungseinrichtung im ersten Anzeigezustand einen definierten Nennstrom aufweist und die Überwachungseinheit die Notabschaltfunktion auslöst, wenn ein tatsächlicher Strom in der Visualisierungseinrichtung kleiner ist als der definierte Nennstrom.

Es ist somit eine Idee der vorliegenden Erfindung, einen adaptierbaren Notausschalter mit einer Überwachungseinheit auszustatten, die den tatsächlichen Zustand der Visualisierung des Notausschalters überwacht und insbesondere mit dem aktuellen Betriebszustand vergleicht und in Abhängigkeit dieser Überwachung eine Aktion auslöst. Die Aktion kann beispielsweise darin bestehen, die elektrische Einrichtung abzuschalten oder ein Anlaufen dieser Einrichtung zu verhindern. Mit anderen Worten kann die Überwachungseinheit bspw. die Notabschaltfunktion auslösen oder alternativ verhindern, dass ein sicherer Zustand der elektrischen Einrichtung durch den Notausschalter angezeigt wird.

Die Überwachungseinheit stellt somit sicher, dass der Notausschalter entsprechend seines Betriebszustandes ordnungsgemäß dargestellt wird. Ein Benutzer der elektrischen Einrichtung kann sich somit darauf verlassen, dass der als aktiv gekennzeichnete Notausschalter auch tatsächlich die relevante Sicherheitsfunktion ausübt bzw. eine Einrichtung nur dann verwendet werden kann, wenn ein entsprechender Notausschalter für den Benutzer sichtbar ist. Auf diese Weise kann bei der Verwendung von adaptiven Notauseinrichtungen die Sicherheit für einen Benutzer weiter erhöht werden.

Die Überwachungseinheit ist als Stromüberwachung ausgebildet. Hierbei wird ein tatsächlicher Strom in der Visualisierungseinrichtung bestimmt und mit einem definierten Nennwert verglichen. Ist der tatsächliche Strom geringer als der Nennstrom, so wird die Notabschaltfunktion ausgelöst. Eine Stromüberwachung lässt sich besonders einfach und kostengünstig realisieren.

Insgesamt kann die erfindungsgemäße Überwachungseinheit leicht realisiert werden, indem vorhandene Funktionen des Notausschalters, bspw. das Auslösen der Notabschaltfunktion, von der Überwachungseinheit mit verwendet werden. Auf diese Weise können bspw. auch Einrichtungen zum Überprüfen der Funktion des Notausschalters für die Überwachung der Visualisierungseinrichtung herangezogen werden. Die neue Überwachungseinheit lässt sich somit besonders kostengünstig realisieren. Die vorstehend genannte Aufgabe ist somit vollständig gelöst.

In einer weiteren Ausgestaltung ist die Überwachungseinheit als Ruhestromrelais mit einem definierten Ruhestrom und mindestens einem Arbeitskontakt ausgebildet, wobei über den Arbeitskontakt die Aktion auslösbar ist.

Ein Ruhestromrelais ist im Ruhezustand bestromt und sein Arbeitskontakt angezogen. Fällt der Strom unter den definierten Ruhestrom des Relais, wird der Arbeitskontakte automatisch geöffnet. Ein Ruhestromrelais eignet sich besonders gut, um einen Stromabfall zu bestimmen und als Reaktion automatisiert eine Aktion auszulösen.

In einer weiteren Ausgestaltung weist die Überwachungseinheit einen Schließerkontakt auf und die elektrischen Kontakte des Notausschalters bilden einen Öffnerkontakt, wobei der Öffnerkontakt und der Schließerkontakt in Serie geschaltet sind.

In dieser Ausgestaltung bilden die zwei elektrischen Kontakte zusammen mit der Kontaktbrücke einen Öffnerkontakt, über den der Notausschalter die Notabschaltfunktion auslösen kann. Im ordnungsgemäßen Betrieb, d.h. wenn der Notausschalter aktiv ist, ist der Öffnerkontakt geschlossen und der Strompfad zwischen den elektrischen Kontakten geschlossen. Ein Schließerkontakt in Serie zu dem Öffnerkontakt wirkt somit als Zustimmschalter, der von der Überwachungseinheit steuerbar ist. Auf diese Weise kann besonders einfach die bestehende Notabschaltfunktion von der Überwachungseinheit mit verwendet werden. Die Überwachungseinheit ist so besonders einfach in bestehende Notausschalter integrierbar.

In einer weiteren Ausgestaltung weist der Notausschalter einen ersten und einen zweiten Strompfad auf, wobei die Aktion ein Trennen des ersten und/oder des zweiten Strompfads bewirkt.

In dieser Ausgestaltung ist der Notausschalter zweikanalig mit zwei separaten Schaltpfaden ausgebildet. Die Überwachungseinheit, bspw. in Form einer Stromüberwachung, kann besonders einfach durch ein oder mehrerer Relais realisiert werden, wobei in jedem Schaltpfad ein Arbeitskontakt der Relais angeordnet ist.

In einer besonders bevorzugten Ausgestaltung weist die Überwachungseinheit einen ersten Schließerkontakt im ersten Strompfad und einen zweiten Schließerkontakt im zweiten Strompfad sowie zum ersten und zweiten Schließerkontakt zwangsgeführte Öffnerkontakte auf, wobei über die Öffnerkontakte der erste und der zweite Strompfad elektrisch verbindbar sind.

In dieser Ausgestaltung weist die Überwachungseinheit Schließer und Öffnerkontakte auf, die zueinander zwangsgeführt sind. Die Schließer sind in den Strompfaden des Notausschalters angeordnet und die Öffner verbinden die Strompfade. Im ordnungsmäßigen Betrieb, d.h. wenn die Überwachungseinheit aktiv ist, sind die Schließer geschlossen und die Öffner geöffnet. Über die zusätzlichen Öffner ist es möglich Fehler in der Überwachungsfunktion aufzudecken, indem Vergleiche zwischen den Strompfaden durchgeführt werden, wie sie bspw. durch ein Sicherheitsschaltgerät zur Querschlusserkennung vorgenommen werden. Sind die Öffner aufgrund eines Fehlers innerhalb der Überwachungseinheit geschlossen, ist ein Vergleich der beiden Strompfade immer positiv, so dass bspw. eine Querschlusserkennung auslösen würde. Auf diese Weise lassen sich besonders vorteilhaft Überwachungsmechanismen für den Notausschalter, bspw. eine Querschlusserkennung, auch für die Überprüfung der Überwachungseinheit heranziehen.

In einer weiteren Ausgestaltung weist die Visualisierungseinrichtung einen weiteren Anzeigezustand auf, wenn die Überwachungseinheit funktionslos ist.

In dieser Ausgestaltung kann die Visualisierungseinrichtung einen weiteren Anzeigezustand einnehmen, der vorteilhaft als Diagnoseanzeige verwendet wird, bspw. wenn ein Fehler in der Überwachungseinheit vorliegt. Über den weiteren Anzeigezustand kann der Benutzer am Notausschalter selbst erkennen, ob die Überwachungseinheit funktionsfähig ist oder nicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung für ein bevorzugtes Einsatzgebiet des neuen Notausschalters,
- Figur 2: eine schematische Ansicht eines Ausführungsbeispiels des neuen Notausschalters,
- Figur 3: eine schaltungstechnische Realisierung eines Ausführungsbeispiels des neuen Notausschalters, und
- Figur 4: eine weitere schaltungstechnische Realisierung eines bevorzugten Ausführungsbeispiels des neuen Notausschalters.

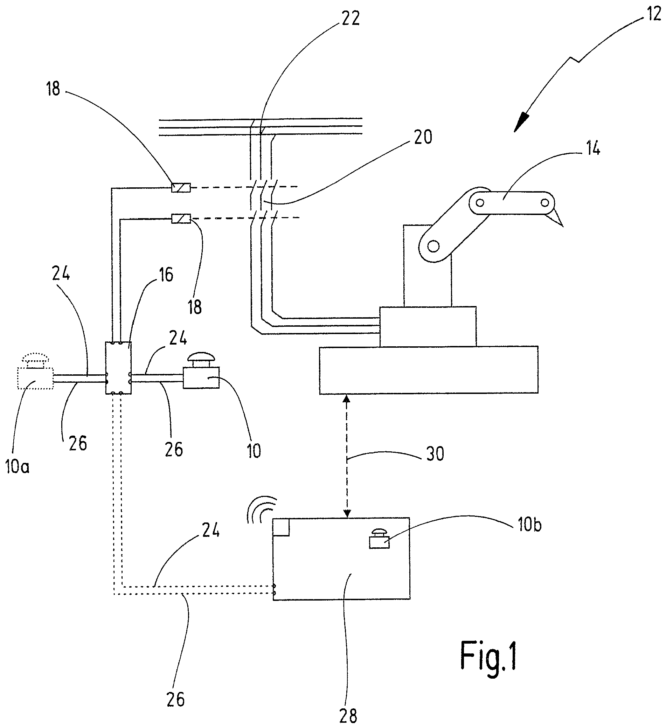

In der Fig. 1 sind Ausführungsbeispiele des neuen Notausschalters mit der Bezugsziffer 10, 10a und 10b bezeichnet.

Die Notausschalter 10, 10a, 10b dienen der Absicherung einer technischen Anlage 12, die hier durch einen automatisiert arbeitenden Roboter 14 angedeutet ist. Von dem Roboter 14 kann in einem unkontrollierten Zustand eine ernstzunehmende Gefahr für Menschen und Material ausgehen, weshalb eine Notabschaltfunktion vorgesehen ist, über die der Roboter 14 in einer Notfall- oder Gefahrensituation gezielt abgeschaltet werden kann. Im vorliegenden Ausführungsbeispiel wird die Notabschaltfunktion aus den erfindungsgemäßen Notausschaltern 10, 10a ,10b, einem Sicherheitsschaltgerät 16 und Schützen 18, deren Kontakt 20 in Serie in einer Stromversorgung 22 des Roboters 14 liegen, gebildet.

Bei dem Sicherheitsschaltgeräte 16 kann es sich um ein einfaches Sicherheitsschaltgerät, ein konfigurierbares Sicherheitsschaltgerät oder aber um eine programmierbare Sicherheitssteuerung handeln. Derartige Geräte sind dazu ausgebildet, in einem Fehlerfall eine sichere und zuverlässig erfolgende Reaktion auszulösen. Im gezeigten Ausführungsbeispiel besteht diese Reaktion beispielsweise darin, über die Schütze 18 die Stromzufuhr 22 zum Roboter 14 zu unterbrechen, um auf diese Weise den Roboter 14 stromlos zu schalten. Alternativ sind jedoch auch andere Abschaltmöglichkeiten vorstellbar, bei denen eine technische Anlage nicht zwangsweise stromlos geschaltet wird, sondern lediglich in einen für den Benutzer ungefährlichen Zustand überführt wird. Die Notabschaltfunktion ist dabei in der Regel mehrkanalig redundant ausgelegt, wie hier bspw. durch die doppelte Auslegung der Schütze 18 angedeutet ist, und gewährleistet so, dass trotz eines Fehlers in einem der Bauteile, die zur Notabschaltfunktion beitragen, ein sicheres Abschalten möglich ist.

Eingangsseitig ist das Sicherheitsschaltgerät 16 mit den erfindungsgemäßen Notausschaltern 10, 10a, 10b verbunden. Die beiden Notausschalter mit den Bezugsziffern 10 und 10a sind hier kabelgebundene Notausschalter, die mit einer hinführenden Leitung 24 und einer rückführenden Leitung 26 mit dem Sicherheitsschaltgerät 16 verbunden sind und vorzugweise für einen Benutzer leicht zugänglich an oder in der Nähe des Roboters 14 angeordnet sind.

Die Bezugsziffer 10b bezeichnet in diesem Ausführungsbeispiel einen Notausschalter, der auf einem mobilen Bedienpanel 28 abgesetzt vom Roboter 14 angeordnet ist. Das Bedienpanel 28 ist vorzugweise über eine lösbare, kabelgebundene elektrische Verbindung 30 mit dem Roboter 14 verbindbar, wobei das Bedienpanel 28 bspw. nur während eines Programmiervorgangs mit dem Roboter 14gekoppelt ist. Alternativ zu einer kabelgebundenen Verbindung 30 ist auch eine trennbare Funkverbindung denkbar, die von einem Benutzer während eines Programmiervorgangs aktiviert und anschließend deaktiviert wird. Die Verbindung des Notausschalter 10b erfolgt dabei physisch oder logisch ebenfalls mit einer hinführenden und einer rückführenden Leitung 24, 26. Bei der Verbindung kann es sich ebenfalls über eine kabelgebundene oder kabellose Verbindung handeln. Besonders bevorzugt ist diese Verbindung mit der Verbindung 30 zum Roboter 14 gekoppelt, so dass, sobald eine Verbindung zum Roboter 14 hergestellt ist, auch der Notausschalter 10b mit dem Sicherheitsschaltgerät 16 verbunden ist.

Um ein Anlaufen der technischen Anlage 12 zu ermöglichen, werden die Schütze 18 vom Sicherheitsschaltgerät 16 angezogen werden. Hierzu prüft das Sicherheitsschaltgerät 16 kontinuierlich, ob ein Signal, welches über die hinführende Leitung 24 zum Notausschalter 10 geführt wird, über die rückführende Leitung 26 wieder am Sicherheitsschaltgerät 16 ankommt. Sind ein ausgehendes und ein eingehendes Signal gleich bzw. entspricht das eingehende Signal einer Erwartung des Sicherheitsschaltgeräts16, werden die Schütze 18 angezogen und die technische Anlage 12 kann anlaufen. Durch Betätigen eines der Notausschalter 10, 10a, 10b wird der Strompfad auf der Leitung 24, 26 unterbrochen und die Schütze fallen ab, woraufhin im vorliegenden Ausführungsbeispiel die technische Anlage 12 wieder stromlos ist.

Es versteht sich, dass Notausschalter 10, 10a, 10b aus sicherheitstechnischen Gründen leicht zugänglich und gut sichtbar ausgebildet seien müssen und sich grundsätzlich unmittelbar im Sichtfeld eines Benutzers befinden sollten. In bestimmten Fällen jedoch, insbesondere beim Zusammenwirken komplexer technischer Anlagen oder bei der Verwendung von mobilen Notausschaltern, wie hier am Beispiel des mobilen Bedienpanels 28 gezeigt, besteht die Anforderung, ggf. Notausschalter inaktiv zu schalten, so dass sie die zuvor beschriebene Notabschaltfunktion nicht auslösen können. Ein Notausschalter ist inaktiv, wenn er die Notabschaltfunktion nicht auslösen kann oder darf. Ein solcher Fall kann eintreten, wenn ein erster Notausschalter beispielsweise nur einen Maschinenteil ausschalten kann, aufgrund des Zusammenwirkens von mehreren Maschinenteilen jedoch ein zweiter Notausschalter relevant wird, der die gesamte Anlage, wie sie sich zu dem Zeitpunkt zusammensetzt, ausschalten kann. In solch einem Fall muss der erste Notausschalter inaktiv geschaltet werden, damit ein Benutzer im Notfall den richtigen Notausschalter wählt und betätigt. Die Notausschalter 10, 10a, 10b sind daher adaptierbare Notausschalter, deren Darstellung sich in Abhängigkeit ihres Zustands ändert.

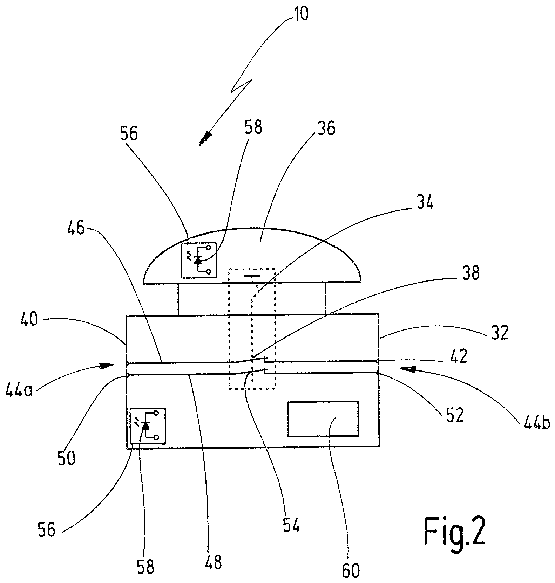

In der Fig. 1 ist ein inaktiver Notausschalter bspw. mit der Bezugsziffer 10a bezeichnet. Ein funktionsloser Notausschalter 10a ist für den Benutzer passiv dargestellt, wie hier durch die gestrichelte Linienführung des Notausschalters 10a angedeutet. Dies kann auf unterschiedliche Weise erfolgen, bspw. durch eine Beleuchtung, die den Notausschalter in normgerechter Farbgebung hervorhebt oder durch eine mechanische Vorrichtung, die den Notausschalter während des inaktiven Zustands verdeckt. Mit anderen Worten wird die normgerechte Darstellung des Notausschalters nur im aktiven Zustand sichtbar. Wie anhand der Fig. 2 näher erläutert ist, weist der erfindungsgemäße Notausschalter darüber hinaus Mittel auf, die bei einem Wechsel zwischen dem aktiven und inaktiven Zustand eines Schalters überprüfen und sicherstellen, ob auch die Darstellung des Notausschalters einen entsprechenden Wechsel vollzogen hat.

In der Fig. 2 ist ein bevorzugtes Ausführungsbeispiel des neuen Notausschalters in seiner Gesamtheit mit der Bezugsziffer 10 bezeichnet.

Der Notausschalter 10 besitzt in diesem Ausführungsbeispiel ein Gehäuse 32, an dem ein Betätigungselement 34 in Form eines pilzförmigen Tasters 36 angeordnet ist. Innerhalb des Gehäuses 32 ist das Betätigungselement 34 ist mit einer Kontaktbrücke 38 verbunden, die einen ersten elektrischen Kontakt 40 und einen zweiten elektrischen Kontakt 42 verbindet. Der erst und der zweite elektrische Kontakt 40, 42 sind über Anschlussklemmen 44a, 44b am Gehäuse 32 nach außen geführt und so mit einem hier nicht dargestellten Sicherheitsschaltgerät in der zuvor beschriebenen Weise verbindbar. Im nichtbetätigten Zustand ist die Kontaktbrücke 38 geschlossen und der erste und der zweite Kontakt 40, 42 sind elektrisch mit einander verbunden.

Wird das Betätigungselement 34 durch Drücken des Tasters 36 betätigt, wird die Kontaktbrücke 38 geöffnet und ein Strompfad 46 zwischen dem ersten elektrischen Kontakt 40 und dem zweiten elektrischen Kontakt 42 getrennt. Ein Signal, welches am ersten Anschluss 44a anliegt, wird folglich nicht mehr an den zweiten Anschluss 44b durchgeschleift. Durch das Ausbleiben des Signals am zweiten Anschluss 44b erkennt ein Sicherheitsschaltgerät 16, ob der Taster 36 betätigt worden ist oder nicht.

Besonders bevorzugt ist der Notausschalter 10, wie hier angedeutet, redundant ausgelegt, d.h. mit einem zweiten Strompfad 48 ausgestattet, der ebenfalls durch das Betätigungselement 34 trennbar ist. Der redundante zweite Strompfad 48 ist hier mit einem weiteren ersten und zweiten elektrischen Kontakt 50, 52 und einer zur ersten Kontaktbrücke 38 zwangsgeführten zweiten Kontaktbrücke 54 ausgebildet.

Der Notausschalter 10 weist ferner eine Visualisierungseinrichtung 56 auf, durch die sich der Notausschalter 10 optisch verändern lässt. Insbesondere kann die Visualisierungseinrichtung 56 einen ersten Anzeigezustand annehmen, in dem der Notausschalter 10 in einer normgerechten Weise, also mit einem in roter Farbe hervorgehobenen Betätigungselement 34 vor gelben Hintergrund, dargestellt ist sowie einen zweiten Anzeigezustand, in dem der Notausschalter 10 verdeckt ist oder neutral angezeigt wird. Im vorliegenden Ausführungsbeispiel umfasst die Visualisierungseinrichtung 56 farbige LEDs 58, die innerhalb des Gehäuses 32 angeordnet sind. Das Gehäuse 32 ist zweitteilig ausgebildet, mit einem ersten Gehäuseteil als Betätigungselement in Form eines pilzförmigen Tasters und einem zweiten Gehäuseteil als Basis. Die Gehäuseteile sind hier aus einem transparenten oder transluzenten Material hergestellt, so dass sie im unbeleuchteten Zustand farblos oder in der Farbe des Hintergrunds, auf dem sie angeordnet sind, erscheinen. Sind die LEDs 58 ausgeschaltet ist der Notausschalter somit nicht als solcher erkennbar. Erst sobald die LEDs 58 aktiviert werden, nimmt der Notausschalter 10 seine charakteristische Farbgebung an, indem er durch die LEDs 58 in den entsprechenden Farben beleuchtet wird. Dabei wird bevorzugt die Basis mit gelben LEDs und das Betätigungselement mit roten LEDs beleuchtet.

Alternativ oder ergänzend zu einer Beleuchtung des Notausschalters kann eine Visualisierungseinrichtung auch ein LCD- oder TFT-Anzeigeelement, zum Beispiel innerhalb des Tasters oder unmittelbar auf der Betätigungsfläche, umfassen oder eine optische Veränderung durch eine mechanische Veränderung, bspw. durch Verschieben einer Gummimanschette erreichen. Eine LCD- oder TFT-Anzeige bzw. ein mechanisches Element haben den Vorteil, dass die Darstellung des Notausschalters nicht von einer Beleuchtung abhängig ist und somit eine normgerechte Anzeige auch ohne Strom möglich ist.

Unabhängig von der konkreten Realisierung kann durch die Visualisierungseinrichtung 56 der Notausschalter 10 aktiv oder passiv dargestellt werden. Besonders bevorzugt ist die Visualisierungseinrichtung 56 mit dem ersten Anschluss 44a des Notausschalters 10 gekoppelt, so dass ein Potential am ersten Anschluss 44a, beispielsweise ein Signal eines angeschlossenen Sicherheitsschaltgeräts, die Visualisierungseinrichtung 56 mit Energie versorgt. Wenn kein Signal des Sicherheitsschaltgeräts am ersten Anschluss 44a anliegt, d.h. der Notausschalter nicht aktiv ist, wird auch die Visualisierungseinrichtung 56 nicht bestromt und der Notausschalter 10 ist unbeleuchtet. Es versteht sich, dass für eine Visualisierungseinrichtung 56, die im stromlosen Zustand einen aktiven Zustand anzeigt eine entsprechende Umkehrung der vorstehenden Logik erfolgen muss.

Ferner weist der Notausschalter 10 eine Überwachungseinheit 60 auf, mit der die Visualisierungseinrichtung 56 überwacht werden kann. Die Überwachungseinheit 60 überprüft, ob je nach Zustand des Notausschalters 10 die Visualisierungseinrichtung 56 die entsprechende Darstellung vorhält. Eine bevorzugte Überwachungseinheit 60 überwacht sowohl den Fall, dass der Notausschalter 10 aktiv ist aber inaktiv dargestellt wird, als auch den Fall, dass der Notausschalter passiv ist jedoch als aktiv gekennzeichnet ist. Alternativ, wenn sich die beiden Zustände ausschließen, kann eine Überwachungseinheit 60 auch nur einen dieser Zustände aktiv überwachen.

Besonders bevorzugt ist die Überwachungseinheit 60 mit der Visualisierungseinrichtung 56 und dem Strompfad 46 zwischen dem ersten elektrischen Kontakt 40 und dem zweiten elektrischen Kontakt 42 gekoppelt und als Baugruppe innerhalb des Gehäuses 32 des Notausschalters 10 angeordnet. Alternativ ist auch eine Anordnung außerhalb des Gehäuses 32 des Notausschalters 10 als separates Bauteil denkbar, beispielsweise zum Nachrüstung bestehender Notausschalter 10.

In einem bevorzugten Ausführungsbeispiel löst die Überwachungseinheit 60 im Falle einer Fehldarstellung der Visualisierungseinrichtung 56 die Notabschaltfunktion aus, indem sie den Strompfad 46, 48 zwischen dem ersten elektrischen Kontakt 40, 50 und dem zweiten elektrischen Kontakt 42, 52 unterbricht. Die Überwachungseinheit 60 kann somit ebenso wie das Betätigungselement 34 die Notabschaltfunktion auslösen. Insbesondere stellt die Überwachungseinheit 60 sicher, dass die Sicherheitsfunktion des Notausschalters 10 nur dann aktiv ist, wenn auch die entsprechende Visualisierung aktiv ist. Die Überwachungseinheit 60 übt in diesem Beispiel somit eine Zustimmfunktion aus und verhindert, dass eine technische Anlage oder Maschine anläuft, wenn beim Aktivieren des Notausschalters 10 dieser nicht ordnungsgemäß dargestellt ist.

Alternativ oder ergänzend kann in einem weiteren Ausführungsbeispiel die Überwachungseinheit 60 jedoch auch sicherstellen, dass im umgekehrten Fall, also wenn der Notausschalter 10 deaktiviert ist, die entsprechende passive Visualisierung des Notausschalters 10 gegeben ist.

Besonders bevorzugt kann die Visualisierungseinrichtung 56 einen dritten Anzeigezustand einnehmen, über den die Visualisierungseinrichtung 56 signalisiert, ob die Überwachungseinheit 60 funktionslos ist. Bspw. könnten die LEDs in Falle einer defekten Überwachungseinheit 60 blicken. Alternativ könnte bei der Verwendung einer TFT-Anzeige als Visualisierungseinheit 56, der dritte Anzeigezustand auch als eine Warnmeldung auf der TFT-Anzeige dargestellt sein.

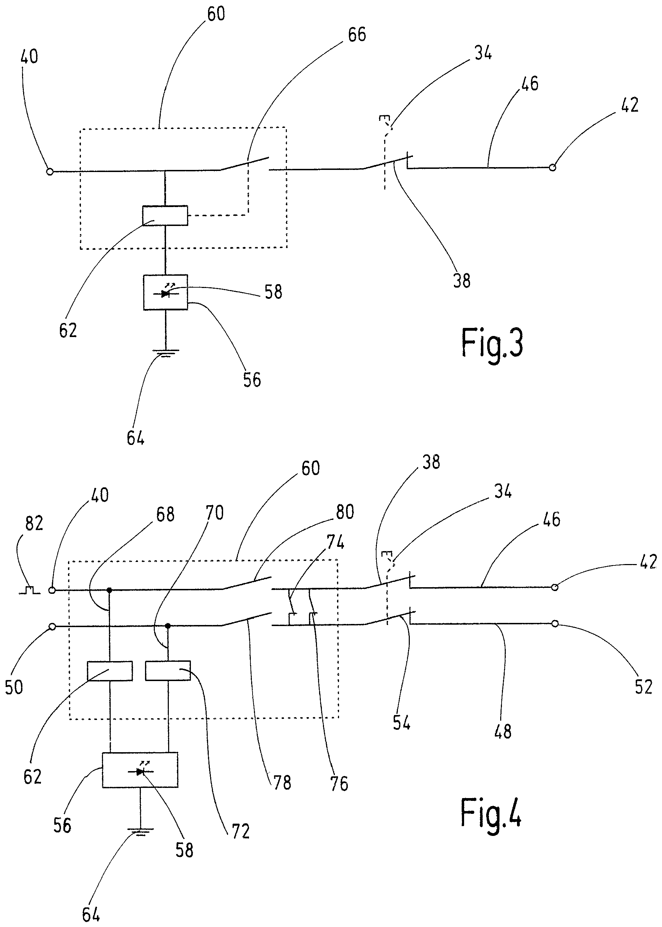

Ein Ausführungsbeispiel einer schaltungstechnischen Realisierung des neuen Notausschalters mit einer Überwachungseinheit ist mit Bezug auf Fig. 3 näher erläutert. Gleiche Bezugszeichen bezeichnen dabei gleiche Teile wie in den vorherigen Ausführungsbeispielen.

Fig. 3 zeigt einen Strompfad 46 zwischen dem ersten elektrischen Kontakt 40 und dem zweiten elektrischen Kontakt 42. Die neue Überwachungseinheit 60 ist durch den gestrichelten Kasten hervorgehoben. Der Strompfad 46 führt über zwei Schaltelemente, einerseits die Kontaktbrücke 38, welche über das Betätigungselement 34 verstellbar ist, und andererseits über einen Arbeitskontakt der neuen Überwachungseinheit 60.

Die Überwachungseinheit 60 ist hier als eine Stromüberwachung mit einem Relais 62 ausgebildet. Das Relais 62 überwacht den tatsächlichen Strom, welcher vom ersten elektrischen Kontakt 40 über die Visualisierungseinrichtung 56 zum Masseanschluss 64 abfließt. Vorzugsweise ist das Relais 62 als Ruhestromrelais mit einem definierten Ruhestrom ausgebildet, wobei die Visualisierungseinrichtung 56 in einem Ansteuerkreis des Relais 62 angeordnet ist und ein Arbeitskontakt 66 des Relais zur Kontaktbrücke 38 in Serie geschaltet ist. Ist der tatsächliche Strom durch das Relais 62 geringer als der Ruhestrom, ist der Arbeitskontakt 66 geöffnet und der Strompfad 46 getrennt.

Der tatsächliche Strom im Ansteuerkreis des Relais 62 entspricht dem tatsächlichen Strom durch die Visualisierungseinrichtung 56. Der Ruhestrom des Relais 62 ist dabei so gewählt, dass er einem Nennstrom der Visualisierungseinrichtung 56 entspricht. Fällt der tatsächliche Strom unter den Nennstrom, d.h. die Visualisierungseinrichtung 56 wird nicht ausreichend oder nicht richtig bestromt, öffnet das Relais 62 den Arbeitskontakt 66 und trennt den Strompfad 46 zwischen dem ersten elektrischen Kontakt 40 und dem zweiten elektrischen Kontakt 42. Durch die Serienschaltung wird der Strompfad 46 folglich unabhängig von der Stellung des Betätigungselementes 34 geöffnet. Mit anderen Worten, wenn die Visualisierungseinrichtung 56 nicht aktiv ist, kann ein an den elektrischen Kontakt 42 angeschlossenes Sicherheitsschaltgerät 16 eine daran angeschlossene technische Anlage 12 nicht freigeben.

Fig. 4 zeigt eine besonders bevorzugte schaltungstechnische Implementierung der neuen Überwachungseinheit 60.

Neben einem ersten Strompfad 46 zwischen dem ersten elektrischen Kontakt 40 und dem zweiten elektrischen Kontakt 42 weist der Notausschalter 10 hier einen zweiten Strompfad 48 zwischen einem weiteren ersten elektrischen Kontakt 50 und einem weiteren zweiten elektrischen Kontakt 52 auf. Der erste und der zweite Strompfad 46, 48 führen je über ein Kontaktbrücke 38, 54, die zueinander zwangsgeführt und mit dem Betätigungselement 34 gekoppelt sind. Es handelt sich somit um eine Realisierung eines zweikanaligen Notausschalters.

Die Visualisierungseinrichtung 56 wird in diesem Ausführungsbeispiel über einen ersten und zweiten Stromkreis 68, 70 gespeist. Der erste Stromkreis 68 verbindet den elektrischen Anschluss 40 mit der Visualisierungseinrichtung 56 und dem Masseanschluss 64. Der zweite Stromkreis 70 verbindet den weiteren ersten elektrischen Anschluss 50 mit der Visualisierungseinrichtung 56 und dem Masseanschluss 64. Die Visualisierungseinheit 56 ist hier als eine Einheit mit LEDs 58 dargestellt. Alternativ kann die Visualisierungseinrichtung 56 auch aus mehreren einzelnen Komponenten gebildet seien, bspw. mit einer Komponente mit gelben LEDs und einer Komponente mit roten LEDs, wobei die erste Komponenten mit den ersten Stromkreis 68 verbunden ist und die zweite Komponente mit dem zweiten Stromkreis 70 verbunden ist.

Die Überwachungseinheit 60 weist hier ferner zwei Relais 62, 72 auf, die je in einem der Stromkreise 68, 70 angeordnet sind. Die Relais 62, 72 sind je mit einem Öffner- und einem Schließerkontakt 74, 76, 78, 80 als Arbeitskontakt ausgebildet. Der Schließerkontakt 78 des Relais 62 ist im Strompfad 48 angeordnet und der Schließerkontakt 80 des Relais 72 ist im Strompfad 46 angeordnet. Die Schließerkontakte 78, 80 sind somit über Kreuz in den Strompfaden 46, 48 angeordnet. Fällt eines der Relais 62, 72 ab, da im entsprechenden Stromkreis 68, 70 der tatsächliche Strom unterhalb des Ruhestroms der Relais 62, 72 fällt, wird der Strompfad 46, 48, der nicht mit dem zugehörigen Stromkreis 68, 70 verbunden ist, getrennt. Fällt beispielsweise das Relais 62 ab, so wird der Strompfad 48 zwischen dem weiteren ersten Kontakt 50 und dem zweiten elektrischen Kontakt 52 geöffnet.

Die Öffnerkontakte 74, 76 der Relais sind parallel zum ersten und zweiten Strompfad 46, 48 angeordnet und verbinden diese, sobald eines der Relais 62, 72 abfällt. Mit anderen Worten sind beim Ausfall eines Relais 62, 72 die beiden zweiten elektrischen Kontakte 42, 52 elektrisch gleichwertig. Darüber hinaus ist ein Strompfad 46 mit einem Testsignal oder -impuls 82 belegbar, so dass die Strompfade 46, 48 im ordnungsmäßigen Betrieb zueinander unterschiedliche Potentiale oder Signale aufweisen. Durch das Gleichsetzen der beiden Strompfade 46, 48 über die Öffnerkontakte 74, 76 im Falle eines Fehlers kann die ordnungsgemäße Funktion der Relais 62, 72 und damit der Überwachungseinheit 60 überprüft werden. Hierzu vergleicht ein hier nicht näher dargestelltes Sicherheitsschaltgerät, welches ausgangsseitig mit den ersten elektrischen Kontakten 40, 50 und eingangsseitig mit den zweiten elektrischen Kontakten 42, 52 verbunden ist, kontinuierlich die Potentiale an den zweiten elektrischen Kontakten 42, 52 und schaltet ggf. eine zu überwachende Anlage ab, wenn beide Potentiale bzw. die Signale auf beiden Strompfaden 46, 48 gleich sind.

Das Belegen der einzelnen Strompfade 46, 48 eines mehrkanaligen Notausschalters 10 mit unterschiedlichen Potentialen bzw. das einkanalige Einspeisen von Testimpulsen ist bei vielen Sicherheitsschaltgeräten Bestandteil einer Querschlusserkennung. Mittels der Querschlusserkennung kann ein Sicherheitsschaltgerät überprüfen, ob in den zumeist redundanten und regelmäßig als zwei Adern eines Kabels ausgebildeten Anschlussleitungen zu einem Notausschalter ein Querschluss, bspw. durch Knicken oder Quetschen des Kabels, aufgetreten ist. Gemäß dem Ausführungsbeispiel nach Fig. 4, insbesondere durch die Verwendung von zwei Relais 62, 72 in der Überwachungseinheit 60 und Öffnerkontakten 74, 76 parallel zu den Strompfaden 46, 48, kann nunmehr auch die Überwachungseinheit 60 durch diese bereits vorhandene Querschlusserkennung mit überprüft werden. Eine gesonderte Überprüfung der Überwachungseinheit 60 ist somit nicht nötig.

Besonders bevorzugt kann das Ergebnis diese Überprüfung unmittelbar durch die Visualisierungseinrichtung 56 ausgegeben werden, indem die Visualisierungseinrichtung einen dritten Anzeigezustand annimmt.

Der neue Notausschalter gemäß dem Ausführungsbeispiel nach Fig. 4 ist somit besonders leicht in vorhandenen Anlagen integrierbar und bietet eine besonders hohe Sicherheit, indem die Überwachungseinheit 60 selbst auf Ihre Funktionsfähigkeit und etwaige Fehler überprüft werden kann.

## Patentansprüche

1. Notausschalter (10) zum Auslösen einer Notabschaltfunktion zum sicherheitsgerichteten Abschalten einer elektrischen Einrichtung (12), mit
- einem Betätigungselement (34) und zumindest zwei elektrischen Kontakten (40, 42), die über eine Kontaktbrücke (38) miteinander verbindbar sind, wobei eine Position der Kontaktbrücke (38) über das Betätigungselement (34) beeinflusst wird, so dass die elektrischen Kontakte (40, 42) geöffnet und/oder geschlossen werden können,
- einem aktiven Betriebszustand, in dem die Notabschaltfunktion durch Bewegen der Kontaktbrücke (38) auslösbar ist, und einem passiven Betriebszustand, in dem der Notausschalter funktionslos ist,
- einer Visualisierungseinrichtung (56) mit zumindest einem ersten und einem zweiten Anzeigezustand, wobei im ersten Anzeigezustand der Notausschalter, insbesondere das Betätigungselement (34), optisch hervorgehoben ist und im zweiten Anzeigezustand der Notausschalter neutral dargestellt ist, und die Visualisierungseinrichtung (56) ferner dazu ausgebildet ist, im aktiven Betriebszustand den ersten Anzeigezustand und im passiven Betriebszustand den zweiten Anzeigezustand anzunehmen,
- mit einer Überwachungseinheit (60), die überwacht, ob sich die Visualisierungseinrichtung (56) im ersten oder im zweiten Anzeigezustand befindet, um in Abhängigkeit davon eine Aktion, insbesondere die Notabschaltfunktion, auszulösen, **dadurch gekennzeichnet, dass** die Visualisierungseinrichtung (56) im ersten Anzeigezustand einen definierten Nennstrom aufweist und die Überwachungseinheit (60) die Notabschaltfunktion auslöst, wenn ein tatsächlicher Strom in die Visualisierungseinrichtung (56) kleiner ist als der definierte Nennstrom.

2. Notausschalter nach Anspruch 1, wobei die Überwachungseinheit (60) als Ruhestromrelais mit einem definierten Ruhestrom und mindestens einem Arbeitskontakt (66) ausgebildet ist und über den Arbeitskontakt (66) die Aktion auslösbar ist.

3. Notausschalter nach einem der Ansprüche 1 oder 2, wobei die Überwachungseinheit (60) einen Schließerkontakt (66) aufweist und der erste und zweite elektrische Kontakte (40, 42) des Notausschalters einen Öffnerkontakt bilden und der Öffnerkontakt und der Schließerkontakt (66) in Serie geschaltet sind.

4. Notausschalter nach einem der Ansprüche 1 bis 3, ferner mit einem ersten und einem zweiten Strompfad (46, 48), wobei die Aktion ein Trennen des ersten und/oder des zweiten Strompfad (46, 48) bewirkt.

5. Notausschalter nach Anspruch 4, wobei die Überwachungseinheit (60) einen ersten Schließerkontakt (78) im ersten Strompfad (46) und einen zweiten Schließerkontakt (80) im zweiten Strompfad (48) sowie zum ersten und zweiten Schließerkontakt zwangsgeführte Öffnerkontakte (74, 76) aufweist, wobei über die Öffnerkontakte (74, 76) der erste und der zweite Strompfad (46, 48) elektrisch verbindbar sind.

6. Notausschalter nach einem der Ansprüche 1 bis 5, wobei die Visualisierungseinrichtung (56) einen weiteren Anzeigezustand einnimmt, wenn die Überwachungseinheit (60) funktionslos ist.

7. Verfahren zum Überwachen eines Notausschalter mit den Schritten:
- Bereitstellen eines Notauschalters zum Auslösen einer Notabschaltfunktion zum sicherheitsgerichteten Abschalten einer elektrischen Einrichtung (12), mit einem Betätigungselement (34) und zumindest zwei elektrischen Kontakten (40, 42), die über eine Kontaktbrücke (38) miteinander verbindbar sind, wobei eine Position der Kontaktbrücke (38) über das Betätigungselement (34) beeinflussbar ist, so dass ein Strompfad (46) zwischen den elektrischen Kontakten (40, 42) geöffnet und/oder geschlossen werden kann;
- Bereitstellen einer Visualisierungseinrichtung (56) mit einem ersten und zweiten Anzeigezustand sowie einer Überwachungseinheit (60) zum Überwachen der Visualisierungseinrichtung (56);
- Einnehmen eines aktiven oder passiven Betriebszustand, wobei im aktiven Betriebszustand die Notabschaltfunktion durch Bewegen der Kontaktbrücke (38) auslösbar ist und im passiven Betriebszustand der Notausschalter funktionslos ist;
- Einnehmen des ersten oder zweiten Anzeigezustand, wobei im ersten Anzeigezustand der Notausschalter, insbesondere das Betätigungselement (34), optisch hervorgehoben wird und im zweiten Anzeigezustand der Notausschalter neutral dargestellt wird, wobei im aktiven Betriebszustand der erste Anzeigezustand und im passiven Betriebszustand der zweite Anzeigezustand angenommen wird,
- Überwachen, ob sich die Visualisierungseinrichtung (56) im ersten oder im zweiten Anzeigezustand befindet;
- Auslösen einer Aktion, insbesondere die Notabschaltfunktion, in Abhängigkeit der Überwachung **dadurch gekennzeichnet, dass** die Visualisierungseinrichtung (56) im ersten Anzeigezustand einen definierten Nennstrom aufweist und die Überwachungseinheit (60) die Notabschaltfunktion auslöst, wenn ein tatsächlicher Strom in die Visualisierungseinrichtung (56) kleiner ist als der definierte Nennstrom.

## Claims

1. An emergency off-switch (10) for triggering an emergency switch-off function for safety-related shutdown of an electrical device (12), comprising
- an actuation element (34) and at least two electrical contact points (40, 42), which can be connected to one another via a contact bridge (38), wherein a position of the contact bridge (38) is influenced by the actuation element (34) such that the electrical contact points (40, 42) can be opened and/or closed,
- an active operating state, in which the emergency switch-off function can be triggered by moving the contact bridge (38), and a passive operating state, in which the emergency off-switch is non-functional,
- a visualization device (56) having at least a first and a second display state, wherein the emergency off-switch, in particular the actuation element (34), is visually highlighted in the first display state, and the emergency off-switch is neutrally displayed in the second display state, and the visualization device (56) is further designed to adopt the first display state in the active operating state and to adopt the second display state in the passive operating state,
- a monitoring unit (60), which monitors whether the visualization device (56) is in the first or in the second display state, in order to trigger an action, in particular the emergency switch-off function, in dependence thereof,
**characterized in that** the visualization device (56) has a defined nominal current in the first display state and the monitoring unit (60) triggers the emergency switch-off function, when an actual current flow into the visualization device (56) is less than the defined nominal current.

2. The emergency off-switch of claim 1, wherein the monitoring unit (60) is designed as a quiescent current relay having a defined quiescent current and having at least one working contact (66), and the action can be triggered via the working contact (66).

3. The emergency off-switch of any of claims 1 or 2, wherein the monitoring unit (60) has a normally open contact (66), and the first and second electrical contact points (40, 42) of the emergency off-switch form a normally closed contact, with the normally closed contact and the normally open contact (66) being connected in series.

4. The emergency off-switch of any of claims 1 to 3, further comprising a first and a second current path (46, 48), wherein the action causes a disconnection of the first and/or the second current path (46, 48).

5. The emergency off-switch of claim 4, wherein the monitoring unit (60) comprises a first normally open contact (78) in the first current path (46) and a second normally open contact (80) in the second current path (48) and comprises normally closed contacts (74, 76) that are mechanically coupled to the first and second normally open contacts, wherein the first and the second current path (46, 48) can be electrically connected via the normally closed contacts (74, 76).

6. The emergency off-switch of any of claims 1 to 5, wherein the visualization device (56) adopts a further display state when the monitoring unit (60) is non-functional.

7. A method for monitoring an emergency off-switch comprising the steps of
- providing an emergency off-switch for triggering an emergency switch-off function for safety-related shutdown of an electrical device (12), said emergency off-switch having an actuation element (34) and at least two electrical contact points (40, 42), which can be connected together via a contact bridge (38), wherein a position of the contact bridge (38) can be influenced via the actuation element (34) so that a current path (46) between the electrical contact points (40, 42) can be opened and/or closed;
- providing a visualization device (56) having a first and second display state and providing a monitoring unit (60) for monitoring the visualization device (56);
- adopting an active or passive operating state, wherein in the active operating state the emergency switch-off function can be triggered by moving the contact bridge (38) and in the passive operating state the emergency off-switch is non-functional;
- adopting the first or second display state, wherein in the first display state the emergency off-switch, in particular the actuation element (34), is visually highlighted and in the second display state the emergency off-switch is neutrally displayed, wherein in the active operating state the first display state is adopted and in the passive operating state the second display state is adopted,
- monitoring whether the visualization device (56) is in the first or in the second display state;
- triggering an action, in particular the emergency switch-off function, in dependence on the monitoring,
**characterized in that** the visualization device (56) has a defined nominal current in the first display state and the monitoring unit (60) triggers the emergency switch-off function, when an actual current flow into the visualization device (56) is less than the defined nominal current.

## Revendications

1. Interrupteur d'arrêt d'urgence (10) pour déclencher une fonction d'arrêt d'urgence pour arrêter de manière sécurisée un dispositif électrique (12), avec
- un élément d'actionnement (34) et au moins deux contacts électriques (40, 42), qui peuvent être reliés l'un à l'autre par le biais d'un pont de contact (38), une position du pont de contact (38) étant influencée par le biais de l'élément d'actionnement (34) de telle sorte que les contacts électriques (40, 42) peuvent être ouverts et/ou fermés,
- un état de fonctionnement actif, dans lequel la fonction d'arrêt d'urgence peut être déclenchée par déplacement du pont de contact (38) et un état de fonctionnement passif, dans lequel l'interrupteur d'urgence est sans fonctionnement,
- un dispositif de visualisation (56) avec au moins un premier et un deuxième état d'affichage, dans un premier état d'affichage, l'interrupteur d'arrêt d'urgence, notamment l'élément d'actionnement (34) est mis en évidence de manière optique et dans un deuxième état d'affichage, l'interrupteur d'arrêt d'urgence est représenté de façon neutre et le dispositif de visualisation (56) est en outre constitué à cet effet pour adopter le premier état d'affichage dans l'état de fonctionnement actif et le deuxième état d'affichage dans l'état de fonctionnement passif,
- avec une unité de contrôle (60), qui contrôle, si le dispositif de visualisation (56) se trouve dans le premier ou dans le deuxième état d'affichage, pour déclencher en fonction de cela une action, notamment la fonction d'arrêt d'urgence,
**caractérisé en ce que**
le dispositif de visualisation (56) comporte un courant nominal défini dans le premier état d'affichage et l'unité de contrôle (60) déclenche la fonction d'arrêt d'urgence, lorsqu'un courant effectif dans le dispositif de visualisation (56) est plus faible que le courant nominal défini.

2. Interrupteur d'arrêt d'urgence selon la revendication 1, l'unité de contrôle (60) étant constituée comme relais de courant de repos avec un courant de repos défini et au moins un contact de travail (66) et l'action peut être déclenchée par le biais du contact de travail (66).

3. Interrupteur d'arrêt d'urgence selon l'une quelconque des revendications 1 ou 2, l'unité de contrôle (60) comportant un contact de travail (66) et le premier et le deuxième contact électrique (40, 42) de l'interrupteur d'arrêt d'urgence formant un contact de repos et le contact de repos et le contact de travail (66) étant montés en série.

4. Interrupteur d'arrêt d'urgence selon l'une quelconque des revendications 1 à 3, avec en outre un premier et un deuxième trajet de courant (46, 48), l'action causant une séparation du premier et/ou du deuxième trajet de courant (46, 48).

5. Interrupteur d'arrêt d'urgence selon la revendication 4, l'unité de contrôle (60) comportant un premier contact de travail (78) dans le premier trajet de courant (46) et un deuxième contact de travail (80) dans le deuxième trajet de courant (48) ainsi que des contacts de repos (74, 76) à guidage forcé vers le premier et le deuxième contact de travail, le premier et le deuxième trajet de courant (46, 48) pouvant être électriquement reliés par le biais des contacts de repos (74, 76).

6. Interrupteur d'arrêt d'urgence selon l'une quelconque des revendications 1 à 5, l'unité de visualisation (56) adoptant un autre état d'affichage lorsque l'unité de contrôle (60) ne fonctionne pas.

7. Procédé de contrôle d'un interrupteur d'arrêt d'urgence avec les étapes suivantes :
- mise à disposition d'un interrupteur d'arrêt d'urgence pour déclencher une fonction d'arrêt d'urgence pour arrêter de manière sécurisée un dispositif électrique (12), avec un élément d'actionnement (34) et au moins deux contacts électriques (40, 42), qui peuvent être reliés l'un à l'autre par le biais d'un pont de contact (38), une position du pont de contact (38) pouvant être influencée par le biais de l'élément d'actionnement (34) de telle sorte qu'un trajet de courant (46) peut être ouvert et/ou fermé entre les contacts électriques (40, 42) ;
- mise à disposition d'un dispositif de visualisation (56) avec un premier et un deuxième état d'affichage ainsi que d'une unité de contrôle (60) pour contrôler le dispositif de visualisation (56) ;
- adoption d'un état de fonctionnement actif ou passif, la fonction d'arrêt d'urgence pouvant être déclenchée à l'état de fonctionnement actif par déplacement du pont de contact (38) et l'interrupteur d'arrêt d'urgence ne fonctionnant pas à l'état de fonctionnement passif ;
- adoption du premier ou du deuxième état d'affichage, dans le premier état d'affichage, l'interrupteur d'arrêt d'urgence, notamment l'élément d'actionnement (34) étant mis en évidence de manière optique et dans le deuxième état d'affichage, l'interrupteur d'arrêt d'urgence étant représenté de manière neutre, le premier état d'affichage étant adopté à l'état de fonctionnement actif et le deuxième état d'affichage à l'état de fonctionnement passif,
- contrôle, si le dispositif de visualisation (56) se trouve dans le premier ou dans le deuxième état d'affichage ;
- déclenchement d'une action, notamment la fonction d'arrêt d'urgence, en fonction du contrôle,
**caractérisé en ce que**
le dispositif de visualisation (56) comporte un courant nominal défini dans le premier état d'affichage et l'unité de contrôle (60) déclenche la fonction d'arrêt d'urgence, lorsqu'un courant effectif dans le dispositif de visualisation (56) est plus faible que le courant nominal défini.
